# FASCICULE DE BREVET EUROPEEN

(11) **EP 0 931 770 B1**
(45) Date de publication et mention de la délivrance du brevet: **04.10.2001**
(21) Numéro de dépôt: 99400081.8
(22) Date de dépôt: 14.01.1999
(51) Int. Cl.: C03B 37/029, C03B 37/027

(54) **Procédé de fibrage semi-continu de préformes pour fibres optiques comportant une étape de préchauffage**
Verfahren zum halbkontinuierlichen Ziehen von Vorformen für optische Fasern beinhaltend einen Schritt zur Vorwärmung
Process for semi-continuous drawing of optical fibre preforms comprising a pre-heating step

(30) Priorité: 22.01.1998 FR 9800651
(43) Date de publication de la demande: 28.07.1999
(73) Titulaire: ALCATEL, 75008 Paris (FR)
(72) Inventeur: Wurier, Bernard, 95760 Valmondois (FR); Hertz, Michel, 75116 Paris (FR); François, Jean-Philippe, 74230 Thônes (FR)
(74) Mandataire: Laroche, Danièle

(56) Documents cités:
- DE-A- 3 929 894
- DE-A- 4 014 330
- PATENT ABSTRACTS OF JAPAN vol. 9, no. 184 (C-294), 30 juillet 1985 & JP 60 051630 A (FURUKAWA ELECTRIC CO. LTD. ET AL.), 23 mars 1985
- PATENT ABSTRACTS OF JAPAN vol. 12, no. 479 (C-552), 14 décembre 1988 & JP 63 195144 A (SUMITOMO ELECTRIC IND. LTD.), 12 août 1988
- PATENT ABSTRACTS OF JAPAN vol. 13, no. 362 (C-625), 14 août 1989 & JP 01 119541 A (HOYA CORP.), 11 mai 1989
- PATENT ABSTRACTS OF JAPAN vol. 18, no. 61 (C-1160), 2 février 1994 & JP 05 279067 A (FUJIKURA LTD.), 26 octobre 1993
- PATENT ABSTRACTS OF JAPAN vol. 7, no. 3 (C-143), 7 janvier 1983 & JP 57 160934 A (NT&T CORP.), 4 octobre 1982

## Description

L'invention se rapporte à un procédé de fibrage d'une fibre optique dans lequel on descend une première préforme suivant une direction de fibrage à travers un four de fibrage pour qu'elle soit chauffée et étirée en une fibre optique, et on descend une deuxième préforme suivant la direction de fibrage à travers le four de fibrage pour qu'elle soit chauffée et étirée à son tour après le retrait de la première préforme. Le document DE-A-3929894 divulge un tel procédé de fibrage.

Dans un procédé de ce type, la première préforme est chauffée par le four de fibrage pendant une certaine durée pour être portée à une température suffisante pour être fibrée. La durée nécessaire à la montée en température de la deuxième préforme après le retrait de la première préforme constitue un temps mort entre le fibrage de ces deux préformes, qui limite la capacité de production du procédé en fibre optique.

Le but de l'invention est d'augmenter la capacité de fibrage d'un procédé tel décrit précédemment.

L'idée à la base de l'invention est de préchauffer la deuxième préforme pendant le fibrage de la première.

A cet effet, l'invention a pour objet un procédé de fibrage d'une fibre optique dans lequel on descend une première préforme suivant une direction de fibrage à travers un four de fibrage pour qu'elle soit chauffée et étirée en une fibre optique, et on descend une deuxième préforme suivant la direction de fibrage à travers le four de fibrage pour qu'elle soit chauffée et étirée à son tour après le retrait de la première préforme, caractérisé en ce que, pendant le fibrage de la première préforme, la deuxième préforme est chauffée dans un four de préchauffage disposé de façon adjacente au four de fibrage.

Le four de préchauffage permet de porter la deuxième préforme à une température légèrement inférieure à la température de fibrage, ce préchauffage étant effectué pendant le fibrage de la première préforme. Ce four de préchauffage est disposé de façon adjacente au four de fibrage pour effectuer un transfert rapide de la deuxième préforme préchauffée dans la direction de fibrage après le retrait de la première préforme.

De cette façon, la durée nécessaire pour porter la deuxième préforme préchauffée à la température de fibrage est considérablement réduite, d'où il résulte une augmentation de la capacité de production d'un procédé selon l'invention par rapport à un procédé connu tel décrit précédemment.

D'autres caractéristiques et avantages de l'invention apparaîtront à la lecture de la description de deux modes de réalisation de l'invention illustrés par les dessins.

La figure 1a montre un procédé selon l'invention mettant en oeuvre une machine de descente préforme avec un four de fibrage, une machine de chargement avec un four de préchauffage, et une machine de déchargement.

La figure 1b montre une fin de fibrage d'une première préforme dans un procédé selon la figure 1a.

La figure 1c montre un retrait d'une première préforme et un transfert d'une deuxième préforme préchauffée dans un procédé selon la figure 1a.

La figure 2a montre un procédé selon l'invention mettant en oeuvre deux machines de descente préforme montées munies chacune d'un four qui est alternativement four de fibrage et four de préchauffage.

La figure 2b montre le remplacement, dans une direction de fibrage, d'une première machine de descente préforme et d'un premier four, par une deuxième machine de descente préforme et d'un deuxième four.

Dans la suite de la description, un même élément porte une même référence dans les différentes figures.

Un procédé de fibrage de préformes en fibres optiques comprend, figure 1a, une machine de descente 1 d'une première préforme 5 fixée par l'intermédiaire d'un support 4 dans un mandrin 3 solidaire d'un chariot 2 mobile en translation dans une direction de fibrage L de la machine de descente préforme. La première préforme 5 est descendue par le chariot 2 à travers un four de fibrage 6 disposé dans la direction de fibrage L pour être chauffée et étirée en une fibre optique reçue par une bobine réceptrice non représentée.

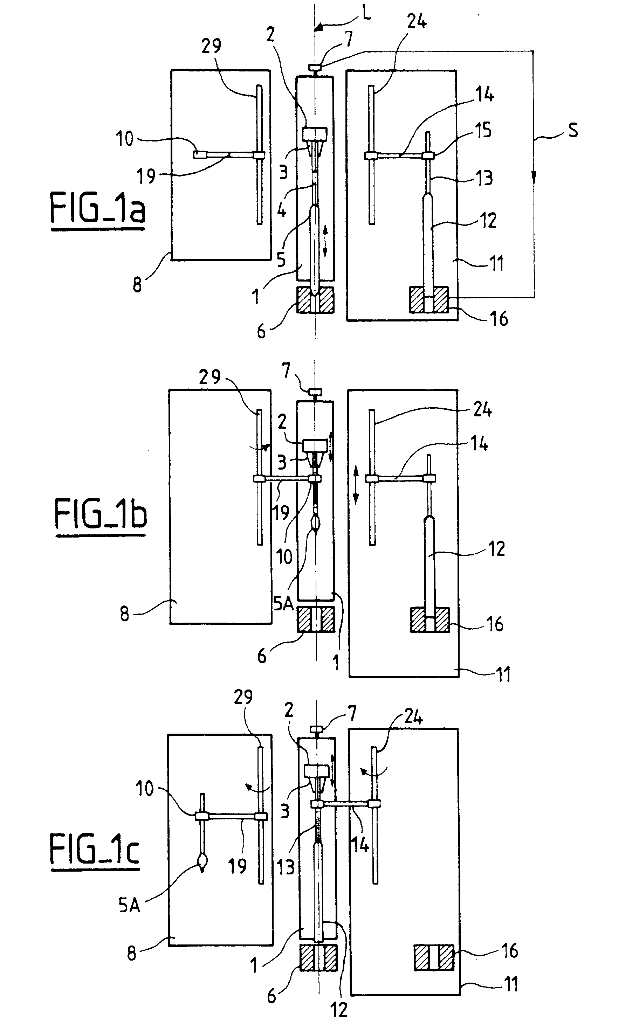

A la fin du fibrage de la première préforme 5, figure 1b, le chariot 2 remonte la partie non consommée 5A hors du four de fibrage 6. Le retrait de cette partie résiduelle 5A met en oeuvre une machine de déchargement 8 qui comprend une tige 29 disposée parallèlement à la direction de fibrage L et un bras 19 qui est solidaire de cette tige 29 et qui est muni d'un système de préhension 10. La tige de guidage 29 pivote sur elle même pour permettre au système de préhension 10 de fixer le support 4 de la première préforme 5, puis pivote à nouveau pour placer la partie résiduelle 5A en position de refroidissement et de déchargement manuel, figure 1c. La machine de descente préforme peut alors recevoir une nouvelle préforme pour être chauffée dans le four de fibrage 6 et être étirée à son tour en une fibre optique.

Selon l'invention, pendant le fibrage de la première préforme, une deuxième préforme est chauffée dans un four de préchauffage disposé de façon adjacente au four de fibrage.

Dans un premier mode de réalisation de l'invention, un four de préchauffage 16 est intégré, figure la, à une machine de chargement 11 qui comprend une tige de guidage 24 disposée parallèlement à la direction de fibrage L et un bras 14 muni d'un système de préhension 15 d'un support 13 de la deuxième préforme 12. Le bras 14 est guidé en translation suivant la direction de fibrage L par la tige de guidage 24 pour descendre la deuxième préforme dans le four de préchauffage 16.

Lorsque le chariot 2 de la machine de descente préforme 1 atteint une position donnée par un codeur 7, un signal S de mise en chauffe est donné par ce codeur 7 au four de préchauffage 16 pour porter la deuxième préforme 12 à une température légèrement inférieure à la température de fibrage. La puissance et le temps de préchauffage du four de préchauffage 16 sont calculés en tenant compte du diamètre de la deuxième préforme pour que cette température soit atteinte au moment où le première préforme 5 est retirée de la machine de descente préforme 1.

Dès ce moment, le bras 14, figure 1b, est guidé en translation par la tige de guidage 24 pour remonter la deuxième préforme 12 du four de préchauffage 16, puis la tige de guidage, figure 1c, pivote sur elle même pour mettre cette deuxième préforme 12 en position dans la direction de fibrage L de la machine de descente préforme 1. Le four de préchauffage 16 est disposé de façon adjacente au four de fibrage 6 pour permettre un transfert rapide de la deuxième préforme préchauffée vers ce four de fibrage 6. Une température de préchauffage proche de la température de fibrage et un transfert rapide permettent de réduire de façon importante la durée nécessaire pour chauffer la deuxième préforme après le retrait de la première, ce qui confère au procédé de l'invention une capacité de production de fibre optique supérieure aux procédés connus.

Il est prévu d'utiliser pour la mise en oeuvre du procédé, une unique machine de déchargement de la première préforme et de chargement de la deuxième préforme, comprenant par exemple un pont roulant.

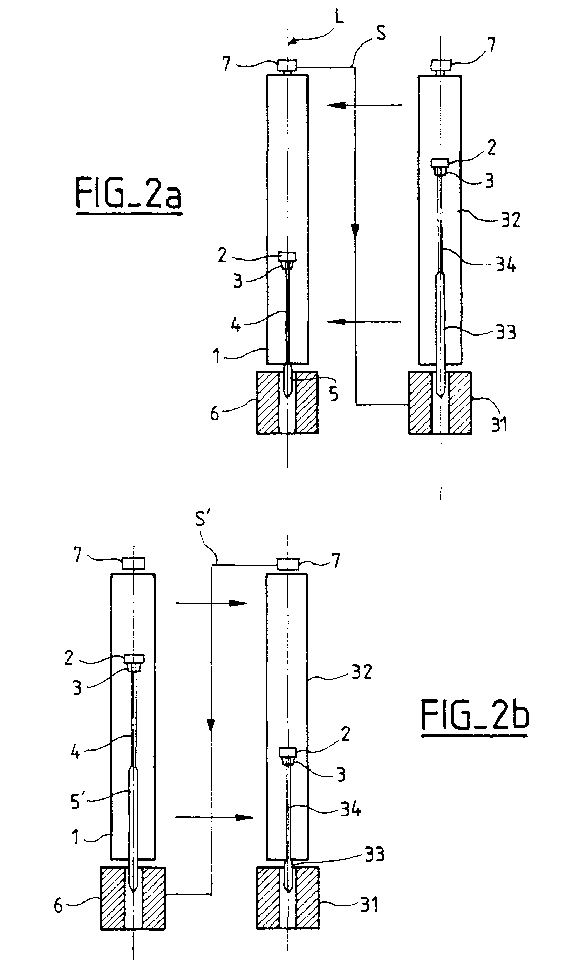

Dans un deuxième mode de réalisation de l'invention, un deuxième four 31 est aligné, figure 2a, avec une deuxième machine de descente préforme 32 qui est du même type que la machine de descente préforme 1 décrite précédemment et qui est disposée de façon adjacente à cette machine de descente préforme.

Comme dans le mode de réalisation précédent, la première préforme 5 est descendue par le chariot 2 mobile en translation dans la direction de fibrage L à travers un premier four 6 pour être chauffée et étirée en une fibre optique reçue par une bobine réceptrice non représentée, ce premier four étant disposé dans la direction de fibrage avec la première machine de descente préforme et servant de four de fibrage.

Pendant le fibrage de la première préforme 5, une deuxième préforme 33 est installée dans la deuxième machine de descente préforme 32 par l'intermédiaire d'un support 34. Lorsque le chariot 2 de la première machine de descente préforme 1 atteint une position donnée par le codeur 7, un signal de mise en chauffe est donné par ce codeur 7 à un deuxième four 31 pour porter la deuxième préforme 33 à une température légèrement inférieure à la température de fibrage, ce deuxième four 31 étant aligné avec la deuxième machine de descente préforme 32 et servant de four de préchauffage.

A la fin du fibrage de la première préforme 5, l'ensemble constitué par la première machine de descente préforme 1 et le premier four 6 est retiré de la direction de fibrage L et est remplacé, figure 2b, par l'ensemble constitué par la deuxième machine de descente préforme 32 et le deuxième four 31. Pour effectuer le remplacement du premier ensemble par le deuxième, il est prévu de disposer par exemple les deux ensembles sur une tourelle pivotante autour d'un axe parallèle à la direction de fibrage L.

La deuxième préforme 33 est chauffée et fibrée à travers le deuxième four 31 qui sert ici de four de fibrage. Pendant ce temps, la première préforme 5 est retirée par exemple au moyen d'une machine de déchargement telle décrite dans le premier mode de réalisation. La première machine de descente préforme 1 est ensuite rechargée par exemple manuellement avec une nouvelle préforme 5'. Un signal S' émis par le codeur 7 dès que le chariot 2 a atteint une certaine position déclenche la mise en chauffe du premier four 6 pour préchauffer la nouvelle préforme 5' pendant le fibrage de la deuxième préforme 33, le premier four 6 servant ici de four de préchauffage.

Dans ce mode de réalisation de l'invention, la durée nécessaire pour porter la deuxième préforme 33 à la température de fibrage est là encore réduite par le préchauffage effectué pendant le fibrage de la première préforme. Les préformes ne sont pas transférées d'un four à l'autre qui servent alternativement de four de fibrage et de four de préchauffage, ce qui annule les risques de chocs thermiques toujours possibles lors du transfert décrit précédemment, même en présence d'un transfert rapide. De plus, ce mode de réalisation de l'invention permet de nettoyer un four après son utilisation en tant que four de fibrage et avant son utilisation en tant que four de préchauffage, à chaque alternance si nécessaire.

Il est prévu d'utiliser une unique machine de descente préforme avec deux fours qui sont alternativement four de fibrage et four de préchauffage. Cette variante représente un investissement moindre puisqu'une seule machine de descente préforme est requise.

## Revendications

1. Un procédé de fibrage d'une fibre optique dans lequel on descend une première préforme (5) suivant une direction de fibrage (L) à travers un four de fibrage (6) pour qu'elle soit chauffée et étirée en une fibre optique, et on descend une deuxième préforme (12) suivant la direction de fibrage à travers le four de fibrage pour qu'elle soit chauffée et étirée à son tour après le retrait de la première préforme, **caractérisé en ce que**, pendant le fibrage de la première préforme (5), la deuxième préforme (12) est chauffée dans un four de préchauffage (16) disposé de façon adjacente au four de fibrage (6).

2. Un procédé de fibrage selon la revendication 1, dans lequel on déclenche une mise en chauffe du four de préchauffage (16) par un signal (S) émis par un codeur (7).

3. Un procédé selon la revendication 1 ou 2, dans lequel on retire la première préforme (5) hors de la direction de fibrage (L) et on transfère la deuxième préforme (12) dans la direction de fibrage (L) par l'intermédiaire de bras (19,14) qui pivotent autour de tiges (29,24) parallèles à la direction de fibrage (L).

4. Un procédé selon la revendication 1 ou 2, dans lequel on chauffe et on fibre alternativement une première et une deuxième préforme (5, 5' et 33) à travers un premier et un deuxième four (6, 31) qui jouent alternativement le rôle d'un four de fibrage et d'un four de préchauffage.

5. Un procédé selon la revendication 4, dans lequel on substitue alternativement par rapport à la direction de fibrage (L) le premier et le deuxième fours (6,31) ensemble avec une première et une deuxième machines de descente préforme (1,32).

## Patentansprüche

1. Verfahren zum Faserziehen einer optischen Faser, bei welchem eine erste Vorform (5) in einer Faserziehrichtung (L) durch einen Faserziehofen (6) abgesenkt wird, damit sie erwärmt und in eine optische Faser gezogen wird, und eine zweite Vorform (12) in der Faserziehrichtung durch den Faserziehofen abgesenkt wird, damit sie erwärmt und ihrerseits nach dem Zurückziehen der ersten Vorform fasergezogen wird, **dadurch gekennzeichnet, dass** während des Faserziehens der ersten Vorform (5) die zweite Vorform (12) in einem dem Faserziehofen (6) benachbarten Vorwärmofen (16) erwärmt wird.

2. Verfahren zum Faserziehen nach Anspruch 1, bei welchem ein Aufheizen des Vorwärmofens (16) durch ein von einem Codierer (7) ausgegebenes Signal (S) ausgelöst wird.

3. Verfahren nach Anspruch 1 oder 2, bei welchem die erste Vorform (5) aus der Faserziehrichtung (L) gezogen wird und die zweite Vorform (12) mittels Arme (19, 14, die um zur Faserziehrichtung (L) parallele Stangen (29, 24) schwenken, in die Faserziehrichtung (L) überbracht wird.

4. Verfahren nach Anspruch 1 oder 2, bei welchem eine erste und eine zweite Vorform (5, 5' und 33) abwechselnd erwärmt und durch einen ersten und zweiten Ofen (6, 31) gezogen werden, die abwechselnd die Rolle eines Faserziehofens und eines Vorwärmofens einnehmen.

5. Verfahren nach Anspruch 4, bei welchem der erste und der zweite Ofen (6, 31) zusammen mit einer ersten und einer zweiten Vorformabsenkvorrichtung (1, 32) in Bezug auf die Faserziehrichtung (L) abwechselnd vertauscht werden.

## Claims

1. A method of drawing an optical fiber in which a first preform (5) is lowered along a fiber-drawing axis (L) through a fiber-drawing oven (6) so as to be heated and drawn down into an optical fiber, and a second preform (12) is lowered along the fiber-drawing axis through the fiber-drawing oven so as to be heated and drawn down in turn after the first preform has been withdrawn, the method being **characterized in that** while the first preform (5) is being drawn down into a fiber, the second preform (12) is heated in a preheating oven (16) disposed adjacent to the fiber-drawing oven (6).

2. A fiber-drawing method according to claim 1, in which heating of the preheating oven (16) is triggered by a signal (S) issued by an encoder (7).

3. A method according to claim 1 or 2, in which the first preform (5) is withdrawn from the fiber-drawing axis (L) and the second preform (12) is transferred onto the fiber-drawing axis (L) by means of arms (19, 14) pivoting about rods (29, 24) parallel to the fiber-drawing axis (L).

4. A method according to claim 1 or 2, in which first and second preforms (5, 5', and 33) are heated and drawn down into fiber in alternation through first and second ovens (6, 31) each of which acts alternately as a fiber-drawing oven and as a preheating oven.

5. A method according to claim 4, in which the first and second ovens (6, 31) together with first and second preform-lowering machines (1, 32) replace each other in alternation on the fiber-drawing axis (L).
